# FASCICULE DE BREVET EUROPEEN

(11) **EP 0 926 396 B1**
(45) Date de publication et mention de la délivrance du brevet: **17.07.2002**
(21) Numéro de dépôt: 98403001.5
(22) Date de dépôt: 01.12.1998
(51) Int. Cl.: F16H 7/08, F16H 7/12

(54) **Tendeur, moteur comportant un tel tendeur et procédé de montage d'un tel tendeur**
Spannvorrichtung, Motor mit einer derartigen Vorrichtung und Verfahren zum Einbau einer solchen Vorrichtung
Tensioner, engine comprising such tensioner and method of mounting such a tensioner

(30) Priorité: 18.12.1997 FR 9716078
(43) Date de publication de la demande: 30.06.1999
(73) Titulaire: HUTCHINSON, 75008 Paris (FR)
(72) Inventeur: Rointru, Claude, 37130 Maziere de Touraine (FR); Defeings, Patrice, 37250 Montbazon (FR)
(74) Mandataire: Hurwic, Aleksander

(56) Documents cités:
- EP-A- 0 113 685
- EP-A- 0 560 685
- US-A- 1 374 643
- US-A- 4 696 664

## Description

La présente invention se rapporte à un tendeur, à un moteur muni d'un tel tendeur et à un procédé de montage d'un tel tendeur.

Les moteurs à combustion interne comportent habituellement des courroies de transmission dont la tension est assurée par des tendeurs comportant une platine montée à rotation autour d'un axe solidarisé avec le moteur. Un exemple de tendeur selon le préambule de la revendication 1 et de procédé de montage selon le préambule de la revendication 15 est décrit dans le Brevet des Etats-Unis n° US-A-4,696,664. Dans ce document, le tendeur comporte des moyens de rappel élastique formés par un ensemble de rondelles Belleville disposées sur le corps du tendeur, des moyens d'amortissement et des moyens de précontrainte inséparables du tendeur et utilisés lorsque celui-ci est monté sur une poulie prenant appui sur la courroie. Bien que donnant généralement satisfaction, ces tendeurs ont un encombrement important et un prix de revient élevé.

C'est par conséquent un but de la présente invention d'offrir un tendeur compact, c'est-à-dire un tendeur ayant une emprise limitée dans le compartiment moteur et présentant un faible volume lors de son stockage antérieurement à son montage.

C'est également un but de la présente invention d'offrir un tendeur facile à particulièrement fiable.

C'est aussi un but de la présente invention d'offrir un tendeur facile à monter dans le compartiment moteur.

C'est également un but de la présente invention d'offrir un tel tendeur présentant un faible prix de revient.

Ces buts sont atteints par un tendeur linéaire selon la présente invention.

L'invention se rapporte principalement à un tendeur linéaire pour courroie, dont une première extrémité comporte des moyens de solidarisation avec un support fixe et une seconde extrémité, opposée à ladite première extrémité, selon l'axe du tendeur, est munie de moyens d'appui sur la courroie, les deux extrémités du tendeur étant reliées par un corps élastique, le tendeur comprenant en outre des moyens de mise sous précontrainte qui comprennent une plaque retirable après montage du tendeur de manière à libérer ladite précontrainte.

L'invention a aussi pour objet un tendeur caractérisé en ce qu'il comporte des moyens de guidage en translation relative de ses deux extrémités.

L'invention a également pour objet un tendeur, caractérisé en ce que la première extrémité comporte un embout de fixation muni de deux ouvertures de réception des moyens de fixation sur le support.

L'invention a aussi pour objet un tendeur, caractérisé en ce que les deux ouvertures sont parallèles entre elles et sensiblement orthogonales à un axe du tendeur, lesdites ouvertures étant adaptées à recevoir des boulons de fixation.

L'invention a également pour objet un tendeur, caractérisé en ce que les moyens d'appui sur la courroie comportent un galet.

L'invention a aussi pour objet un tendeur, caractérisé en ce que l'axe du tendeur correspond sensiblement à la bissectrice de l'angle (α) formé par la courroie au niveau des tangentes aux moyens d'appui, notamment au galet.

L'invention a également pour objet un tendeur, caractérisé en ce qu'il travaille en compression.

L'invention a aussi pour objet un tendeur, caractérisé en ce que le corps élastique reliant les deux extrémités du tendeur comporte un ressort hélicoïdal.

L'invention a également pour objet un tendeur, caractérisé en ce qu'il comporte des moyens d'amortissement.

L'invention a aussi pour objet un tendeur, caractérisé en ce que les moyens reliant les deux extrémités du tendeur comportent un ensemble piston-cylindre.

L'invention a aussi pour objet un tendeur, caractérisé en ce que les moyens de mise sous précontrainte du corps élastique comportent en plus des tiges susceptibles d'être fixées sur les deux extrémités du tendeur, la plaque étant tendue entre les tiges des deux extrémités du tendeur, le retrait de la plaque assurant la libération des deux extrémités du tendeur.

L'invention a également pour objet un moteur à combustion interne, caractérisé en ce qu'il comporte au moins une courroie munie d'un tel tendeur.

L'invention a aussi pour objet un moteur, caractérisé en ce que la courroie est une courroie de transmission entraînée par une poulie solidarisée avec un vilebrequin du moteur.

L'invention a également pour objet un moteur, caractérisé en ce qu'un axe du tendeur correspond sensiblement à la bissectrice d'un angle (α) formé par la courroie au niveau des tangentes au galet.

L'invention a aussi pour objet un procédé de montage d'un tendeur sur un moteur, comportant des étapes consistant à :
a) solidariser une première extrémité du tendeur sur un support, notamment sur le carter du moteur ;
b) appliquer un galet sur une courroie ;
   ledit procédé comportant en outre une étape consistant à :
c) retirer une plaque des moyens de précontrainte de manière à appliquer à la courroie une tension mécanique désirée.

L'invention a aussi pour objet un procédé, caractérisé en ce qu'à l'étape a) on assure la fixation de la première extrémité du tendeur de manière à sensiblement aligner l'axe du tendeur avec la bissectrice de l'angle (α) formé par la courroie au niveau des tangentes au galet.

L'invention a également pour objet un procédé, caractérisé en ce qu'à l'étape a), on visse sans les serrer des boulons dans des taraudages du support à travers des lumières d'un embout de fixation, on positionne le tendeur dans la position correspondant à la tension mécanique désirée de la courroie et on serre les boulons dans cette position.

La présente invention sera mieux comprise au moyen de la description ci-après et des figures annexées données comme des exemples non limitatifs et sur lesquels :
- la figure 1 est une vue en coupe longitudinale avec arrachement partiel de l'exemple préféré de réalisation du tendeur selon la présente invention dans une condition comprimée ;
- la figure 2 est une vue longitudinale du tendeur de la figure 1 orthogonal à la vue de la figure 1, avec coupe à travers le galet d'application de force sur la courroie, dans une condition non comprimée ;
- la figure 3 est une vue de côté d'une variante de réalisation d'une tendeur, qui ne fait pas partie de l'invention;
- la figure 4 est une vue de côté d'un moteur selon la présente invention comprenant un tendeur de la figure 1.

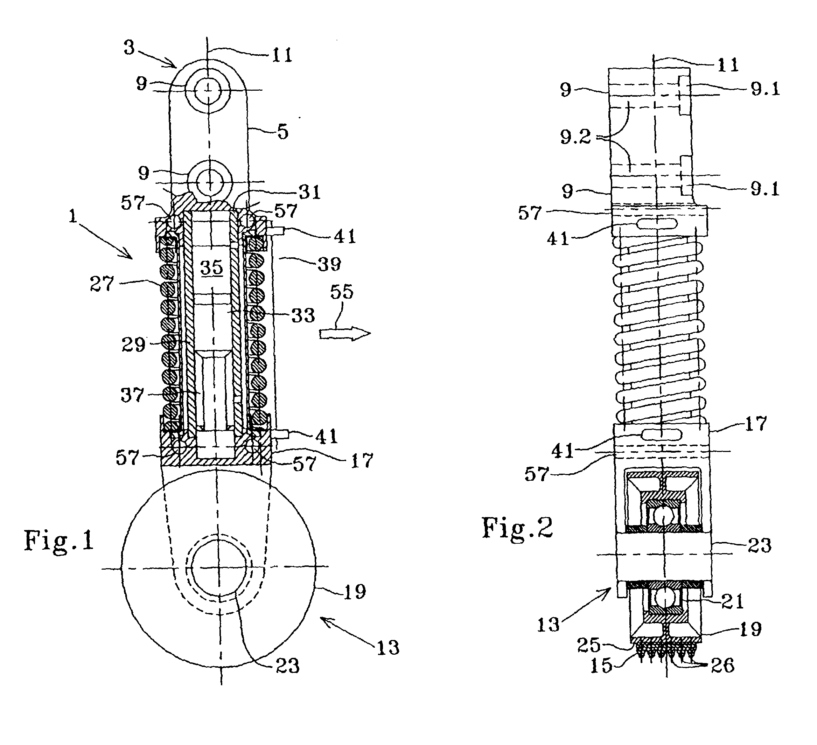

Sur les figures 1 à 4, on a utilisé les mêmes références pour désigner les mêmes éléments.

Sur les figures 1 et 2, on peut voir un tendeur linéaire 1 selon la présente invention muni à une première extrémité 3 d'un embout de fixation 5 comportant des moyens de solidarisation avec un support 7, typiquement sur le carter d'un moteur. On entend par solidarisation une immobilisation aussi bien axiale qu'angulaire (0° de liberté).

Dans l'exemple préféré illustré, l'embout de fixation 5 comporte deux ouvertures 9 longitudinales et parallèles entre elles, disposées orthogonalement à un axe 11 du tendeur, chacune susceptible de recevoir un boulon de fixation 53.

Chaque ouverture 9 comporte un tronçon cylindrique 9.1 ayant un diamètre suffisant pour permettre de loger au moins une partie de la tête d'un boulon 53 dans le prolongement duquel se trouve un second tronçon 9.2 ayant un diamètre inférieur de manière à pouvoir recevoir la tige du boulon.

Il peut s'avérer avantageux de pouvoir adapter un même tendeur à de nombreux moteurs ou de pouvoir faire varier la position du tendeur 1 selon la présente invention par rapport au support 7.

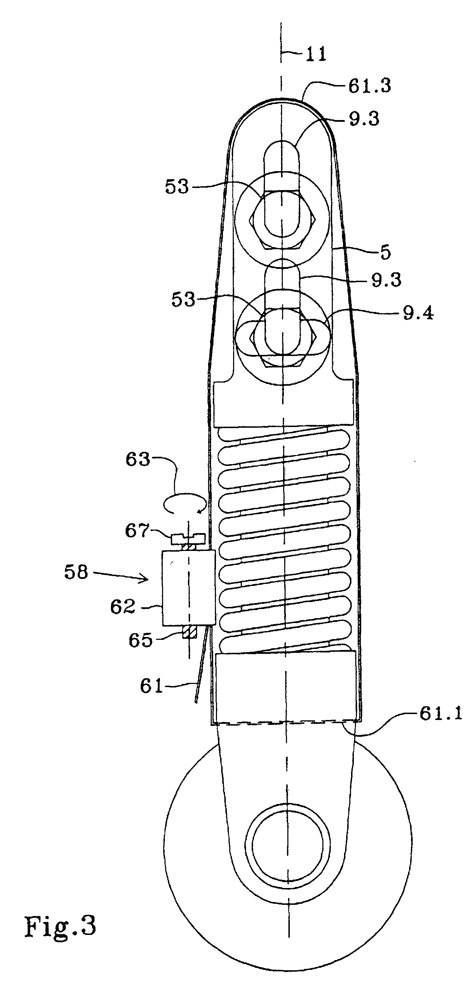

L'embout de fixation 5 du tendeur 1 de la figure 3 qui ne fait pas partie de l'invention comporte des lumières allongées 9.3 disposées selon l'axe 11 permettant, avant le serrage des boulons 53, de translater le tendeur 1 parallèlement à l'axe 11 jusqu'à la position idéale. De plus, cet ajustement permet de récupérer la tolérance de fabrication de la courroie 15 et les tolérances de fabrication des accessoires et, notamment, les variations de diamètre des poulies menantes et menées, la position des trous de fixation sur le support 7 et analogue. Après serrage des boulons 53 l'embout de fixation 5 est solidarisé avec son support 7 alors que la chape 17 peut se déplacer de manière à mettre la courroie sous tension, rattraper les variations relatives de longueur de la courroie 15 sous l'effet de son usure, de la température et de la prise de puissance des accessoires entraînés par la courroie

En variante, il peut être avantageux de pouvoir incliner l'axe 11 du tendeur 1 par rapport au support 7. Une lumière angulaire 9.4 permet de faire tourner, de manière limitée, l'embout de fixation 5 par rapport au support 7. La lumière angulaire 9.4 peut être associée à une ouverture 9 ou, comme illustré, à une lumière linéaire 9.3.

En variante, on peut mettre en oeuvre un embout de fixation 5 en équerre comportant deux ouvertures 9 de réception de boulons, parallèles entre elles, orthogonales à l'axe 11 et alignées selon un axe incliné ou, avantageusement orthogonal par rapport à l'axe 11.

Il est bien entendu que les boulons 53 peuvent être remplacés par tout autre moyen de fixation de type connu.

La mise en oeuvre de deux boulons décalés permet d'assurer la solidarisation du tendeur selon la présente invention avec le carter 7 du moteur. Une seconde extrémité 13 du tendeur 1 selon la présente invention comporte des moyens d'appui adaptés à la courroie 15 dont il doit réguler la tension mécanique.

Dans l'exemple préféré illustré, l'extrémité 13 comporte une chape 17 munie d'un galet 19 avantageusement monté sur un roulement par exemple de type roulement à billes 21 d'axe 23.

La surface de roulement 25 du galet 19 est adaptée à la courroie 15. Dans l'exemple illustré, la courroie 15 comporte une face principale munie de dents longitudinales 26 la face opposée de la courroie sur laquelle prend appui le galet 19 étant lisse. Toutefois, la mise en oeuvre de galets comportant des crans, gorges ou autre éléments de guidage longitudinal de la courroie adaptés à la géométrie de la face de la courroie sur laquelle il s'applique, ne sort pas du cadre de la présente invention.

Les extrémités 3 et 13 du tendeur 1 selon la présente invention sont reliées par des moyens connus comme par exemple un ressort hélicoïdal 27 à spires non jointives des moyens hydrauliques d'amortissement 29 comportant un cylindre 31 muni d'un piston 33 délimitant une première chambre 35 et une deuxième chambre 37 avec écoulement du fluide par des orifices calibrés (non représentés) entre les deux chambres de manière à assurer l'amortissement hydraulique par perte de charge, des moyens d'amortissement comportant des éléments en élastomère, notamment sous la forme d'un surmoulage du ressort 27 ou autre. Un exemple de moyens d'amortissement susceptible d'être mis en oeuvre dans un tendeur selon l'invention est décrit dans le Brevet FR-A-2 688 565.

Il est à noter que l'ensemble piston 31-cylindre 33 participe à la rigidification du tendeur 1 et au guidage axial lors de la translation relative des extrémités 3 et 13 du tendeur.

Les extrémités 3 et 13, ainsi que les moyens de liaison mécanique tels que éléments de guidage en translation, par exemple du type piston 31-cylindre 33 et/ou le ressort 27 sont avantageusement tous alignés selon l'axe 11 du tendeur selon l'invention. Ainsi, l'embout de fixation 5 se trouve à l'opposé, selon l'axe 11, du galet 19.

Le tendeur 1 selon la présente invention comporte des moyens 39 de maintien du tendeur dans la condition comprimée illustrée sur la figure 1. Les moyens de maintien 39 comportent par exemple une plaque ou bande avantageusement métallique s'étendant entre les deux extrémités 3 et 13 et comportant des ouvertures de réception des tétons 41 orthogonaux à l'axe 11, solidarisées avec ces deux extrémités.

Les tétons 41 ont par exemple une section circulaire ou, de préférence une section rectangulaire ou carrée.

En variante, la plaque 39 comporte à proximité de chacune de ses deux extrémités des tiges normales au plan de la plaque pénétrant dans des ouvertures 57 ménagées dans les extrémités 3 et 13. La traction sur la plaque et par suite le retrait des tiges des ouvertures 57 assurent la libération de la précontrainte.

Il peut s'avérer avantageux de pouvoir déposer le tendeur 1 selon la présente invention lors des opérations de maintenance du moteur pour en contrôler le bon fonctionnement, pour le remplacer par un tendeur neuf et/ou pour inspecter la courroie 15 en vue d'un échange éventuel. Le tendeur de la figure 3 qui ne fait pas partie de l'invention est muni d'un dispositif 58 de compression permettant de comprimer le ressort 27 et, par suite, de diminuer la tension dans la courroie 15 permettant la dépose du tendeur 1 et/ou de la courroie 15 sans les abîmer et sans risque de détente brusque du tendeur pouvant blesser le mécanicien effectuant cette opération.

Le dispositif 58 de compression du ressort 27 comporte un ruban 61 avantageusement métallique passant autour des éléments des deux extrémités 3 et 13 du tendeur 1 et un mécanisme 62 disposé sur un premier côté du tendeur 1, permettant, sur commande mécanique 63, d'enrouler ou de dérouler le ruban 61.

Dans l'exemple illustré on utilise un collier de serrage comportant un ruban 61 muni de fentes régulièrement réparties sur toute la longueur du ruban 61 parallèles entre elles et inclinées par rapport aux côtés longitudinaux d'un angle égal à celui d'un pas de vis 65 d'une vis sans fin 67 maintenue par le boîtier du mécanisme 62.

De tels colliers sont habituellement utilisés notamment pour fixer les extrémités des tuyaux d'arrosage. Une première extrémité du ruban 61 est solidarisée avec le mécanisme 62 disposé sur un premier côté du tendeur 1.

Le ruban 61 passe en 61.1 par la base de la chape 17, longe en 61.2 le deuxième côté du tendeur 1, opposé au premier côté, s'enroule, en 61.3 autour de la chape 17 et retourne au mécanisme 62 dont la vis 67 s'engrène dans les fentes du ruban 61.

Le dispositif 58 peut être associé ou non avec des moyens 39 de maintien du tendeur dans la condition comprimée. Dans ce dernier cas, avant le montage, le ressort 27 est comprimé par le dispositif 58.

Le tendeur est mis en place et solidarisé avec le support 7. Puis le ressort 27 est détendu en tournant la vis 67 jusqu'à ce que la tension de la courroie 15 équilibre celle du ressort 27. En poursuivant la rotation de la vis 67, on assure la libération de l'extrémité du ruban 61 que l'on enlève du tendeur.

Pour la dépose du tendeur, on effectue les opérations inverses, à savoir mise en place du dispositif 58, rotation 63 de la vis 67 en sens inverse de celui permettant la libération du ressort 27 jusqu'à la compression maximale du ressort 27, puis on dévisse les boulons 53.

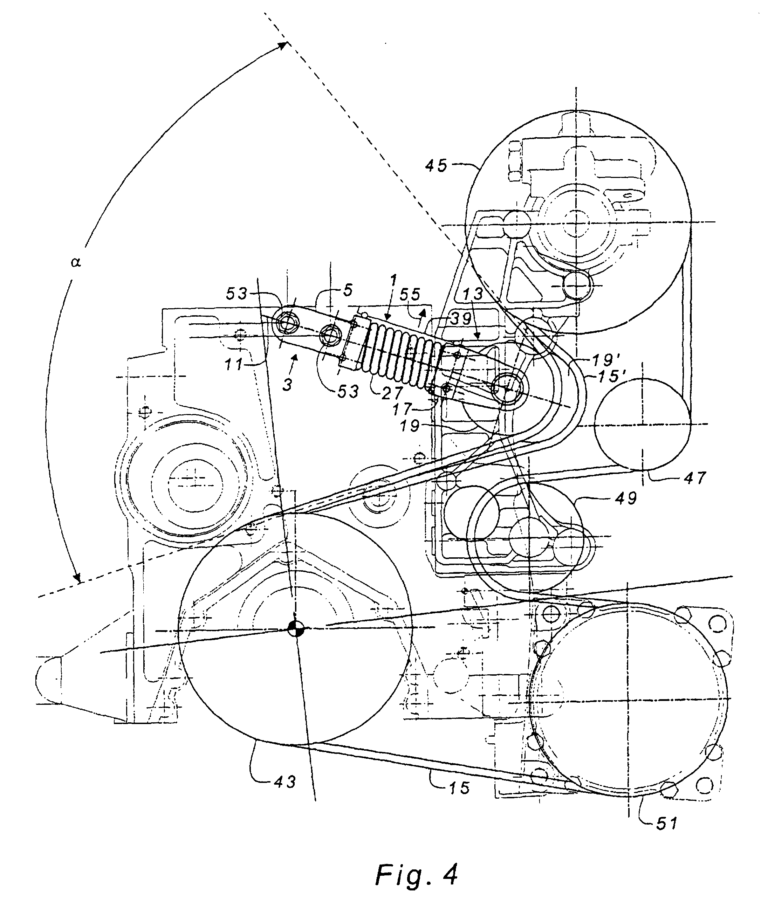

Sur la figure 4, on peut voir un moteur 7 selon la présente invention comportant un tendeur 1 prenant appui sur une courroie 15 de transmission, avantageusement du type comportant des crans longitudinaux 26 entraînée par une poulie 43 solidarisée avec le vilebrequin du moteur 7 et entraînant une poulie 45 montée sur l'axe d'un dispositif de direction assistée, une poulie 47 montée sur l'axe de l'alternateur, un galet enrouleur 49 et une poulie 51 montée sur l'axe du compresseur. Le galet 19 d'un tendeur 1 selon la présente invention est appliqué sur la courroie 15.

Dans l'exemple illustré, le tendeur 1 travaille en compression l'embout de fixation 5 étant solidarisé avec le moteur 7 par l'intermédiaire de boulons 53 logés dans les ouvertures 9.

Avantageusement, l'axe 11 du tendeur 1 correspond sensiblement à la bissectrice de l'angle α formé par la courroie 15 aux niveaux des tangentes au galet 19, le ressort 27 étant comprimé ou, au contraire, le ressort 27 étant libéré de la précontrainte.

On assure le montage du tendeur 1 dans une condition comprimée. Lorsque le tendeur est en place, les boulons 53 vissés et le galet 19 appliqué sur la courroie 15, on libère les moyens de précontrainte 39, par exemple par une traction selon la flèche 55 sur la plaque des moyens 39, le retrait de la plaque assure la libération du ressort 27 avec éloignement des extrémités 3 et 13 du tendeur.

Sur la figure 4, le galet et la courroie correspondant à la condition de travail, après retrait de la plaque des moyens 39 portent les références 19', respectivement 15'.

Le tendeur comportant uniquement un ressort 27 présente un prix de revient particulièrement modéré alors que celui comportant, en outre, des moyens d'amortissement, présente des performances élevées.

Il est bien entendu que la mise en oeuvre d'un tendeur linaire 1 travaillant en traction, notamment d'un tendeur comportant un ressort hélicoïdal 27 à spire jointive ne sort pas du cadre de la présente invention.

La présente invention s'applique principalement à l'industrie automobile.

## Revendications

1. Tendeur linéaire (1) d'axe (11), pour courroie (15), dont une première extrémité (3) comporte des moyens de solidarisation avec un support fixe (7) et une seconde extrémité (13), opposée à ladite première extrémité, selon l'axe (11) du tendeur (1), est munie de moyens (19) d'appui sur la courroie (15), les deux extrémités (3, 13) du tendeur (1) étant reliées par un corps élastique (27), le tendeur comprenant en outre des moyens de mise sous précontrainte,
**caractérisé en ce que** les moyens (39, 41, 57) de mise sous précontrainte comprennent une plaque (39) retirable après montage du tendeur (1) de manière à libérer ladite précontrainte.

2. Tendeur selon la revendication 1, **caractérisé en ce qu'**il comporte des moyens de guidage (31, 33) en translation relative de ses deux extrémités (3, 13).

3. Tendeur selon la revendication 2, **caractérisé en ce que** la première extrémité (3) comporte un embout de fixation (5) muni de deux ouvertures (9) de réception des moyens de fixation (53) sur le support (7).

4. Tendeur selon la revendication 3, **caractérisé en ce que** les deux ouvertures (9) sont parallèles entre elles et sensiblement orthogonales à un axe (11) du tendeur (1), lesdites ouvertures (9) étant adaptées à recevoir des boulons de fixation (53).

5. Tendeur selon l'une quelconque des revendications précédentes, **caractérisé en ce que** les moyens (19) d'appui sur la courroie (15) comportent un galet.

6. Tendeur selon l'une quelconque des revendications précédentes, **caractérisé en ce que** l'axe (11) du tendeur (1) correspond sensiblement à la bissectrice de l'angle (α) formé par la courroie (15) au niveau des tangentes aux moyens d'appui, notamment au galet (19).

7. Tendeur selon l'une quelconque des revendications précédentes, **caractérisé en ce qu'**il travaille en compression.

8. Tendeur selon l'une quelconque des revendications précédentes, **caractérisé en ce que** le corps élastique (27) reliant les deux extrémités (3, 13) du tendeur (1) comporte un ressort hélicoïdal.

9. Tendeur selon l'une quelconque des revendications précédentes, **caractérisé en ce qu'**il comporte des moyens (29, 31, 33, 35, 37) d'amortissement.

10. Tendeur selon l'une quelconque des revendications précédentes, **caractérisé en ce que** les moyens reliant les deux extrémités du tendeur comportent un ensemble piston (31)-cylindre (33).

11. Tendeur selon l'une quelconque des revendications précédentes, **caractérisé en ce que** les moyens (39) de mise sous précontrainte du corps élastique (27) comportent en plus des tiges (41) susceptibles d'être fixées sur les deux extrémités (3, 13) du tendeur (1), la plaque (39) étant tendue entre les tiges (41) des deux extrémités (3, 13, du tendeur (1), le retrait (55) de la plaque (39) assurant la libération des deux extrémités (3, 13) du tendeur (1).

12. Moteur à combustion interne, **caractérisé en ce qu'**il comporte au moins une courroie (15) munie d'un tendeur (1) selon l'une quelconque des revendications précédentes.

13. Moteur selon la revendication 12, **caractérisé en ce que** la courroie (15) est une courroie de transmission entraînée par une poulie (43) solidarisée avec un vilebrequin du moteur.

14. Moteur selon la revendication 12 ou 13, **caractérisé en ce qu'**un axe (11) du tendeur (1) correspond sensiblement à la bissectrice d'un angle α formé par la courroie (15) au niveau des tangentes au galet (19)

15. Procédé de montage d'un tendeur selon l'une quelconque des revendications 1 à 11 sur un moteur (7), comportant des étapes consistant à :
a) solidariser une première extrémité (3) du tendeur (1) sur un support (7), notamment sur le carter du moteur ;
b) appliquer un galet (19) sur une courroie (15) ;
**caractérisé en ce qu'**il comporte en outre une étape consistant à :
c) retirer une plaque (39) des moyens de précontrainte de manière à appliquer à la courroie (15) une tension mécanique désirée.

16. Procédé selon la revendication 15, **caractérisé en ce qu'**à l'étape a) on assure la fixation de la première extrémité (3) du tendeur (1) de manière à sensiblement aligner l'axe (11) du tendeur avec la bissectrice de l'angle (α) formé par la courroie (15) au niveau des tangentes au galet (19).

17. Procédé selon la revendication 15 ou 16, **caractérisé en ce qu'**à l'étape a) on visse sans les serrer des boulons (53) dans des taraudages du support (7) à travers des lumières (9.3, 9.4) d'un embout de fixation (5), on positionne le tendeur dans la position correspondant à la tension mécanique désirée de la courroie (15) et on serre les boulons (53) dans cette position.

## Patentansprüche

1. Mit der Achse (11) lineare Spannvorrichtung (1) für einen Treibriemen (15), deren eines, erstes Ende (3) Mittel zur Befestigung mit einer festen Auflage (7) umfasst; und ein zweites, zum ersten Ende (13) entlang der Achse (11) der Spannvorrichtung (1) entgegengesetztes Ende (13) mit Mitteln (19) zum Abstützen auf dem Treibriemen (15) versehen ist, wobei die beiden Enden (3, 13) der Spannvorrichtung (1) durch einen elastischen Körper (27) miteinander verbunden sind, wobei die Spannvorrichtung darüber hinaus Mittel zum Beaufschlagen mit mechanischer Vorspannung umfasst,
**dadurch gekennzeichnet, dass** die Mittel (39, 41, 57) zum Beaufschlagen mit mechanischer Vorspannung eine Platte (39) umfassen, die nach der Montage der Spannvorrichtung (1) zurückgezogen werden kann, um die mechanische Vorspannung freizusetzen.

2. Spannvorrichtung nach Anspruch 1, **dadurch gekennzeichnet, dass** sie Führungsmittel (31, 33) umfasst, die in Bezug auf ihre beiden Enden (3, 13) translatorisch verschiebbar sind.

3. Spannvorrichtung nach Anspruch 2, **dadurch gekennzeichnet, dass** das erste Ende (3) ein Ansatzstück zur Befestigung (5) umfasst, das mit zwei Öffnungen (9) zur Aufnahme der Befestigungsmittel (53) an der Auflage (7) versehen ist.

4. Spannvorrichtung nach Anspruch 3, **dadurch gekennzeichnet, dass** die beiden Öffnungen (9) zueinander parallel und im wesentlichen zu einer Achse (11) der Spannvorrichtung (1) senkrecht sind, wobei die Öffnungen (9) zur Aufnahme der Befestigungsschrauben (53) ausgelegt sind.

5. Spannvorrichtung nach einem der vorhergehenden Ansprüche, **dadurch gekennzeichnet, dass** die Mittel (19) zum Abstützen auf dem Treibriemen (15) einen Rollkörper umfassen.

6. Spannvorrichtung nach einem der vorhergehenden Ansprüche, **dadurch gekennzeichnet, dass** die Achse (11) der Spannvorrichtung (1) im wesentlichen der Winkelhalbierenden des Winkels (α) entspricht, der vom Treibriemen (15) auf gleicher Höhe mit den Tangenten zu den Mitteln zum Abstützen, insbesondere zum Rollkörper (19), gebildet ist.

7. Spannvorrichtung nach einem der vorhergehenden Ansprüche, **dadurch gekennzeichnet, dass** sie unter Kompression arbeitet.

8. Spannvorrichtung nach einem der vorhergehenden Ansprüche, **dadurch gekennzeichnet, dass** der elastische Körper (27), der die beiden Enden (3, 13) der Spannvorrichtung (1) miteinander verbindet, eine Schraubenfeder umfasst.

9. Spannvorrichtung nach einem der vorhergehenden Ansprüche, **dadurch gekennzeichnet, dass** sie Dämpfungsmittel (29, 31, 33, 35, 37) umfasst.

10. Spannvorrichtung nach einem der vorhergehenden Ansprüche, **dadurch gekennzeichnet, dass** die Mittel, die die beiden Enden der Spannvorrichtung miteinander verbinden, eine Kolben (31)-Zylinder (33)-Baugruppe umfassen.

11. Spannvorrichtung nach einem der vorhergehenden Ansprüche, **dadurch gekennzeichnet, dass** die Mittel (39), die den elastischen Körpers (27) unter mechanische Vorspannung setzen, darüber hinaus Stangen (41) umfassen, die an den beiden Enden (3, 13) der Spannvorrichtung (1) befestigt werden können. wobei die Platte (39) zwischen den Stangen (41) der beiden Enden (3, 13) der Spannvorrichtung (1) eingespannt ist, wobei der Rückzug (55) der Platte (39) das Freisetzen der beiden Enden (3, 13) der Spannvorrichtung sicherstellt.

12. Verbrennungsmotor, **dadurch gekennzeichnet, dass** er zumindest einen Treibriemen (15) umfasst, der mit einer Spannvorrichtung (1) nach einem der vorhergehenden Ansprüche versehen ist.

13. Motor nach Anspruch 12, **dadurch gekennzeichnet, dass** der Treibriemen (15) ein Antriebsriemen ist, der von einer Riemenscheibe (43) mitgenommen wird, die mit einer Kurbelwelle des Motors fest verbunden ist.

14. Motor nach Anspruch 12 oder 13, **dadurch gekennzeichnet, dass** eine Achse (11) der Spannvorrichtung (1) im wesentlichen der Winkelhalbierenden eines Winkels (α) entspricht, der vom Treibriemen (15) auf gleicher Höhe mit den Tangenten zum Rollkörper (19) gebildet ist.

15. Verfahren zur Montage einer Spannvorrichtung nach einem der Ansprüche 1 bis 11 an einem Motor (7), mit den Schritten, die darin bestehen:
a) ein erstes Ende (3) der Spannvorrichtung (1) mit einer Auflage (7), insbesondere dem Gehäuse des Motors, fest zu verbinden;
b) einen Rollkörper (19) an einen Treibriemen (15) anzulegen;
**dadurch gekennzeichnet, dass** es darüber hinaus den Schritt umfasst, der darin besteht:
c) eine Platte (39) der Mittel zum Beaufschlagen mit mechanischer Vorspannung zurückzuziehen, um an den Treibriemen (15) eine gewünschte mechanische Spannung anzulegen.

16. Verfahren nach Anspruch 15, **dadurch gekennzeichnet, dass** beim Schritt a) die Befestigung des ersten Endes (3) der Spannvorrichtung (1) dergestalt sichergestellt wird, dass die Achse (11) der Spannvorrichtung im wesentlichen mit der Winkelhalbierenden des Winkels (α) fluchtet, der vom Treibriemen (15) auf gleicher Höhe mit den Tangenten zum Rollkörper (19) gebildet ist.

17. Verfahren nach Anspruch 15 oder 16, **dadurch gekennzeichnet, dass** beim Schritt a) die Schrauben (53), ohne sie festzuziehen, durch die Langlöcher (9.3, 9.4) eines Ansatzstückes zur Befestigung (5) in die Gewinde der Auflage (7) geschraubt werden, die Spannvorrichtung in die Stellung gebracht wird, die der gewünschten mechanischen Spannung des Treibriemens (15) entspricht und die Schrauben (53) in dieser Stellung festgezogen werden.

## Claims

1. Linear tension device (1) which has an axis (11), for a belt (15), and whose first end (3) comprises means of fixedly joining to a fixed support (7) and whose second end (13), opposite the first end along the axis (11) of the tension device (1), is provided with means (19) of contact on the belt (15), the two ends (3, 13) of the tension device (1) being connected by a resilient body (27), the tension device further comprising pretensioning means, **characterised in that** the pretensioning means (39, 41, 57) comprise a plate (39) which can be withdrawn once the tension device (1) is assembled in order to release the pretensioning action.

2. Tension device according to claim 1, **characterised in that** it comprises guiding means (31, 33) during relative translation of its two ends (3, 13).

3. Tension device according to claim 2, **characterised in that** the first end (3) comprises a fixing end member (5) which is provided with two openings (9) for receiving means for fixing (53) to the support (7).

4. Tension device according to claim 3, **characterised in that** the two openings (9) are parallel with one another and substantially orthogonal relative to an axis (11) of the tension device (1), the openings (9) being adapted to receive fixing bolts (53).

5. Tension device according to any one of the preceding claims, **characterised in that** the means (19) of contact on the belt (15) comprises a roller.

6. Tension device according to any one of the preceding claims, **characterised in that** the axis (11) of the tension device (1) corresponds substantially to the bisectrix of the angle (α) formed by the belt (15) in the region of the tangents relative to the means of support, in particular relative to the roller (19).

7. Tension device according to any one of the preceding claims, **characterised in that** it operates by compression.

8. Tension device according to any one of the preceding claims, **characterised in that** the resilient body (27) which connects the two ends (3, 13) of the tension device (1) comprises a helical spring.

9. Tension device according to any one of the preceding claims, **characterised in that** it comprises means (29, 31, 33, 35, 37) of damping.

10. Tension device according to any one of the preceding claims, **characterised in that** the means which connect the two ends of the tension device comprise a piston (31)-cylinder (33) assembly.

11. Tension device according to any one of the preceding claims, **characterised in that** the means (39) for pretensioning the resilient body (27) further comprise rods (41) which are capable of being fixed to the two ends (3, 13) of the tension device (1), the plate (39) being tensioned between the rods (41) of the two.ends (3, 13) of the tension device (1), the withdrawal (55) of the plate (39) ensuring the release of the two ends (3, 13) of the tension device (1).

12. Internal combustion engine, **characterised in that** it comprises at least one belt (15) which is provided with a tension device (1) according to any one of the preceding claims.

13. Engine according to claim 12, **characterised in that** the belt (15) is a driving belt which is driven by a pulley (43) which is fixedly joined to an engine crankshaft.

14. Engine according to claim 12 or 13, **characterised in that** an axis (11) of the tension device (1) corresponds substantially to the bisectrix of an angle (α) formed by the belt (15) in the region of the tangents relative to the roller (19).

15. Method for the mounting of a tension device according to any one of claims 1 to 11 on an engine (7), comprising stages consisting in:
a) fixed joining of a first end (3) of the tension device (1) to a support (7), in particular to the housing of the engine;
b) application of a roller (19) to a belt (15) ;
**characterised in that** it further comprises a stage consisting in:
c) withdrawal of a plate (39) of the pretensioning means in order to apply to the belt (15) a desired mechanical tension.

16. Method according to claim 15, **characterised in that**, in stage a), the fixing of the first end (3) of the tension device (1) is ensured in order substantially to align the axis (11) of the tension device with the bisectrix of the angle (α) formed by the belt (15) in the region of the tangents relative to the roller (19).

17. Method according to claim 15 or 16, **characterised in that**, in stage a), bolts (53) are screwed, without being tightened, into the internal screw threads of the support (7) through slots (9.3, 9.4) of a fixing end member (5), the tension device is positioned in the position corresponding to the desired mechanical tension of the belt (15) and the bolts (53) are tightened **in that** position.
